# EUROPÄISCHE PATENTANMELDUNG

(11) **EP 3 112 319 A1**
(43) Veröffentlichungstag der Anmeldung: **04.01.2017**
(21) Anmeldenummer: 15174259.0
(22) Anmeldetag: 29.06.2015
(51) Int. Cl.: C01G 1/02, C01B 33/18, C01B 13/34

(54) **VERFAHREN ZUR HERSTELLUNG VON METALLOXIDPULVERN MITTELS FLAMMENSPRAYPYROLYSE**

(71) Anmelder: Evonik Degussa GmbH, 45128 Essen (DE)
(72) Erfinder: Katusic, Stipan, Prof., 65812 Bad Soden (DE); Kress, Peter, 63791 Karlstein (DE); Alff, Harald, 63796 Kahl (DE); Renger, Tobias, 63538 Großkrotzenburg (DE); Wiegand, Armin, 63538 Großkrotzenburg (DE)

(57) **Zusammenfassung**

Verfahren zur Herstellung von Metalloxidpulvern mittels einer Flammenspraypyrolyse, bei dem man ein eine Metallverbindung enthaltendes Aerosol in einem Reaktor in eine Flamme einbringt und dort zur Reaktion bringt und das erhaltene Metalloxidpulver von gasförmigen Stoffen abtrennt, wobei
a) die Flamme durch die Zündung eines Sauerstoff enthaltenden Gases (1) mit einem Brenngas gebildet wird,
b) das Aerosol durch gemeinsames Zerstäuben einer eine Metallverbindung enthaltenden Lösung und eines Zerstäubungsgases mittels einer oder mehrerer Düsen erhalten wird und
c) das Verhältnis der Sprayfläche zur Reaktorquerschnittsfläche wenigstens 0,2 ist.

## Beschreibung

Die Erfindung betrifft ein Verfahren zur Herstellung von Metalloxidpulvern mittels Flammenspraypyrolyse.

In Chemical Engineering Science, Vol. 53, No. 24, pp. 4105-4112, 1998 ist die Herstellung von Silicapartikeln durch Reaktion eines Siloxanes mit Sauerstoff/Stickstoffmischungen und einem Brenngas in einem Flammendiffusionsreaktor beschrieben.

In DE-A-10139320 wird die Herstellung kugelförmiger Silicateilchen mit einer Teilchengrösse von 10 nm bis 10 µm und einer spezifischen Oberfläche von 3-300 m²/g offenbart. Dabei wird ein nichthalogeniertes Siloxan in einer Flamme umgesetzt. Die adiabatische Flammentemperatur beträgt hierbei 1600 - 5600°C. Die Verbrennung des Siloxans wird durch Zufuhr des Siloxans in flüssiger Form in den Brenner und Versprühen der Flüssigkeit mittels einer Düse durchgeführt. Das Versprühen des Siloxans erfolgt unter Verwendung eines Versprühmediums, wie Luft oder Dampf. Der maximale Tröpfchendurchmesser beträgt nicht mehr als 100 µm.

In EP-A-1688394 wir ein Verfahren zur Herstellung eines Metalloxidpulvers mit einer BET-Oberfläche von mindestens 20 m²/g offenbart, indem man ein Aerosol mit Sauerstoff in einem Reaktionsraum bei einer Reaktionstemperatur von mehr als 700°C reagieren läßt. Das Aerosol wird durch Verdüsen eines Ausgangsmaterials, mittels einer Mehrstoffdüse erhalten. Besondere Relevanz kommt dem Tröpfchendurchmesser D₃₀ zu mit 30 - 100 µm zu. Außerdem ist die Anzahl der Aerosoltröpfchen, welche grösser als 100 µm sind, bei 10% begrenzt.

In US2004156773 wird ein Verfahren zur Herstellung von pyrogenen Metalloxidteilchen offenbart, das die Schritte umfasst: Bereitstellung eines Strom eines flüssigen Ausgangsmaterials aus einer nichthalogenierten verflüchtigbaren Metalloxid-Vorstufe; Bereitstellen eines Stroms aus einem Brenngas und Verbrennen des flüssigen Ausgangsmateriales; Eindüsen der flüssigen Metalloxid-Vorstufe in den Strom des Verbrennungsgases.

In WO2010/069675 wird ein niedrigoberflächiges, pyrogenes Siliciumdioxidpulver offenbart. Es wird hergestellt, indem man ein Aerosol erhalten durch Verdüsung wenigstens eines flüssigen Siloxanes mit einem sauerstoffenthaltenden Gas in eine Flamme einbringt. Dabei gelten zusätzliche Bedingungen bezüglich des Verhältnises eingesetzter Sauerstoff/Bedarf an Sauerstoff zur vollständigen Oxidation, des Verhältnises Sauerstoff/Brenngas und des Abkühlprozesses. Die bei der Verdüsung gebildeten Tröpfchen sollten nicht größer als 100 µm sein.

In Powder Technology 246 (2013) 419-433 und Chemical Engineering Research and Design 92 (2014) 2470-2478 wird der Effekt von Düsengeometrie, Tröpfchenverteilung und die Tröpfchenverdampfung im Zusammenhang mit anderen Prozessparametern einer Flammenspraypyrolyse anhand von Modellen untersucht.

Obwohl die Flammenspraypyrolyse ein etabliertes Verfahren zur Herstellung von Metalloxiden ist, ist das Verständnis wie das Zusammenspiel der Prozessparameter die Eigenschaften des späteren Produktes bestimmt nur ansatzweise geklärt. So stellt die vollständige Umsetzung der Ausgangstoffe, insbesondere kohlenstoffhaltiger Ausgangsstoffe, bei geichzeitig hohem Durchsatz eine besondere Herausforderung dar.

Aufgabe der vorliegenden Erfindung war daher, ein alternatives Verfahren zur Herstellung von Metalloxiden mittels einer Flammenspraypyrolyse bereitzustellen, welches diese Probleme überwindet.

Gegenstand der Erfindung ist ein Verfahren zur Herstellung von Metalloxidpulvern mittels einer Flammenspraypyrolyse, bei dem man ein eine Metallverbindung enthaltendes Aerosol in einem Reaktor in eine Flamme einbringt und dort zur Reaktion bringt und das erhaltene Metalloxidpulver von gasförmigen Stoffen abtrennt, wobei
a) die Flamme durch die Zündung eines Sauerstoff enthaltenden Gases (1) mit einem Brenngas gebildet wird,
b) das Aerosol durch gemeinsames Zerstäuben einer Metallverbindung und eines Zerstäubungsgases mittels einer oder mehrerer Düsen erhalten wird und
c) das Verhältnis der Sprayfläche zur Reaktorquerschnittsfläche wenigstens 0,2, bevorzugt 0,2 - 0,8, besonders bevorzugt 0,3 - 0,7, ist.

Unter Sprayfläche ist dabei die Fläche zu verstehen, die das Aerosol 30 cm unterhalb der Düsenaustritte einnimmt. Dem erfindungsgemäßen Verhältnis der Sprayfläche zur Reaktorquerschnittsfläche liegen eine sehr feine Zerstäubung und eine große Flächenabdeckung zugrunde, die die Umsetzung des Aerosoles in der Flamme günstig beeinflussen.

Die Zerstäubungsform des Aerosols ist vorzugsweise ein kreisförmiger Kegel mit einem Streubereich von 70 - 130°. Die mittlere Tropfengröße des zerstäubten Aerosoles ist bevorzugt 10 - 150 µm.

Eine besondere Ausführungsform sieht vor, dass das Aerosol erzeugt wird, indem die die Metallverbindung enthaltende Lösung und das Zerstäubungsgas in eine Mischkammer innerhalb der Düse strömen und in der Mischkammer vorgesehene Einbauten die Lösung unter Einwirkung des Zerstäubungsgases in einzelnen Tröpfchen zerteilt wird und das Aerosol aus der Mischkammer über Bohrungen in den Reaktor eingebracht wird.

Bei dem erfindungsgemäßen Verfahren wird ein Sauerstoff enthaltendes Gas (1) eingesetzt. Dieses wird zusammen mit dem Brenngas für die Zündung der Flamme benötigt. Zusätzlich kann ein Sauerstoff enthaltendes Gas (2) in den Reaktor eingebracht werden. Bei den Sauerstoff enthaltenden Gasen (1) und (2) handelt es sich in der Regel um Luft. Das Sauerstoff enthaltende Gas (1) wird als Primärluft, das Sauerstoff enthaltende Gas (2) als Sekundärluft bezeichnet. Bevorzugt wird die Menge an Sauerstoff enthaltenden Gas (2) so eingestellt, dass das Verhältnis Sauerstoff enthaltendes Gas (2) / Sauerstoff enthaltendes Gas (1) = 0,1 - 2 ist. Besonders bevorzugt ist der Bereich 0,2 - 1. Die Menge an Sauerstoff enthaltendem Gas (1) + (2) ist so bemessen, dass das Brenngas und die Metallverbindung vollständig umgesetzt werden können. Als brenngas wird bevorzugt Wasserstoff eingesetzt.

Als Zerstäubungsgas kann bei dem erfindungsgemäßen Verfahren Luft, mit Sauerstoff angereicherte Luft und/oder ein inertes Gas wie Stickstoff eingesetzt werden. In der Regel wird Luft als Zerstäubungsgas eingesetzt. Für die Zerstäubungsgasmenge gilt nach dem erfindungsgemäßen Verfahren, dass das Verhältnis Durchsatz Metallverbindung/ Zerstäubungsgasmenge bevorzugt 0,1 -10 kg/Nm³ und besonders bevorzugt 0,25 - 5 kg/Nm³ ist.

Die Metallverbindung kann als solche selbst in flüssiger Form oder in Form einer Lösung eingesetzt werden. Als Lösungsmittel kommen Wasser und organische Lösungsmittel in Frage.

Die Metallkomponente der Metallverbindung wird bevorzugt aus der Gruppe bestehend aus Al, Co, Cr, Cu, Fe, Hf, In, Li, Mn, Mo, Nb, Ni, Si, Sn, Ta, Ti, V, Y, Zn und Zr ausgewählt. Im Rahmen der Erfindung soll Si, welches besonders bevorzugt ist, als Metall gelten.

Prinzipiell ist die Natur der Metallverbindungen nicht weiter beschränkt, solange sie unter den Reaktionsbedingungen unter Bildung der Metalloxide hydrolysierbar oder oxidierbar sind. So können beispielsweise Chloride, Nitrate oder metallorganische Verbindungen eingesetzt werden. Es ist ebenso möglich, dass die Lösung unterschiedliche Metallverbindungen eines Metalles oder mehrere Metallverbindungen mit unterschiedlichen Metallkomponenten enthält. Im letzteren Fall werden Metallmischoxide gebildet.

Das erfindungsgemäße Verfahren ist besonders geeignet für den Einsatz von Metallverbindungen, die neben der Metallkomponente auch Kohlenstoff enthalten. Das Verfahren erlaubt die Herstellung kohlenstoffarmer Metalloxide. Kohlenstoffarm soll bedeuten, dass der Kohlenstoffgehalt der Metalloxide kleiner als 0,1 Gew.-%, bevorzugt kleiner 0,05 Gew.-%, ist.

Insbesondere kann die Metallverbindung eine siliciumhaltige Verbindung sein, die aus der Gruppe bestehend aus Silanen, Polysiloxanen, cyclischen Polysiloxanen, Silazanen und beliebigen Mischungen hiervon ausgewählt ist. Explizit seien Tetramethoxysilan, Tetraethoxysilan, Methyltriethoxysilan, Dimethyldimethoxysilan, Dimethyldiethoxysilan, Trimethylmethoxysilan, Trimethylethoxysilan, Diethylpropylethoxysilan, Siliconöl, Octamethylcyclotetrasiloxan (D4), Decamethylcyclopentasiloxan, Dodecamethylcyclohexasiloxan, Hexamethylcyclotrisiloxan und Hexamethyldisilazan genannt.

Eine besondere Ausführungsform der Erfindung sieht die Herstellung eines Kieselsäurepulvers mit einer BET-Oberfläche von wenigstens 50 m²/g, bevorzugt 70 - 300 m²/g, und einem Kohlenstoffgehalt von weniger als 0,1 Gew.-%, bevorzugt 0,01 - 0,05 Gew.-%, mittels einer Flammenspraypyrolyse vor, bei dem man ein eine siliciumhaltige Verbindung enthaltendes

Aerosol in einem Reaktor in eine Flamme einbringt und dort zur Reaktion bringt, und das erhaltene Kieselsäurepulver von gasförmigen Stoffen abtrennt, wobei
a) die Flamme durch die Zündung eines Sauerstoff enthaltenden Gases (1) mit einem Brenngas gebildet wird,
b) die siliciumhaltige Verbindung aus der Gruppe bestehend aus Silanen, Polysiloxanen, cyclischen Polysiloxanen, Silazanen und beliebigen Mischungen hiervon ausgewählt ist,
c) das Aerosol durch gemeinsames Zerstäuben einer die siliciumhaltige Verbindung enthaltenden Lösung und eines Zerstäubungsgases mittels einer oder mehrerer Düsen erhalten wird und das Verhältnis der Sprayfläche zur Reaktorquerschnittsfläche wenigstens 0,2, bevorzugt 0,2 - 0,8, besonders bevorzugt 0,3 - 0,7, ist und man
d) zusätzlich ein Sauerstoff enthaltendes Gas (2) in den Reaktor einbringt, wobei das Verhältnis Sauerstoff enthaltendes Gas (2) / Sauerstoff enthaltendes Gas (1) = 0,1 - 2 ist.

### Beispiele

### Beispiel 1:

Aus 1,0 kg/h D4 und 4,0 kg/h Zerstäuberluft werden mittels einer innenmischenden Zweistoffdüse, Modelle 0/60 - 0/64, Fa. Schlick, ein Aerosol erzeugt, welches in einen Reaktor hinein in eine Flamme zerstäubt wird. Es ergibt sich eine Sprayfläche von 0,88 dm². Das Verhältnis Sprayfläche/ Reaktorquerschnittsfläche beträgt 0,5.Im Reaktor brennt eine Knallgasflamme aus Wasserstoff (2 Nm³/h) und Primärluft (20 Nm³/h), in der das Aerosol zur Reaktion gebracht wird. Zusätzlich wird Sekundärluft (5 Nm³/h) in den Reaktor eingebracht. Nach Abkühlung wird die Kieselsäure an einem Filter von gasförmigen Stoffen abgetrennt. Die mittlere Verweilzeit des Reaktionsgemisches im Reaktor beträgt 1,67 s. Die Temperatur 0,5 m unterhalb der Flamme beträgt 642°C. Die Kieselsäure hat eine BET-Oberfläche von 202 m²/g und einen Kohlenstoffgehalt von 0,04 Gew.%.

Die Beispiele 2 - 8 werden analog durchgeführt. Die Einsatzmengen sind in der Tabelle wiedergegeben.

Das Verhältnis Sprayfläche/Reaktorquerschnittsfläche wird dabei variiert von 0,35 - 0,62. Die erhaltenen Kieselsäuren weisen eine BET-Oberfläche von 85 - 293 m²/g auf, wobei der Kohlenstoffgehalt mit 0,01 - 0,04 Gew.-% durchgehend sehr gering ist.

Auch die Vergleichsbeispiele V1 - V4 werden analog Beispiel 1 durchgeführt, jedoch wird hier eine außenmischende Zweistoffdüse, Modelle 02 - 09, Fa. Schlick, eingesetzt. Es ergeben sich deutlich geringere Sprayflächen und entsprechend deutlich geringere Verhältnisse Sprayfläche/ Reaktorquerschnittsfläche. Die erhaltenen Kieselsäuren weisen eine BET-Oberfläche von 16 - 70 m²/g auf, wobei der Kohlenstoffgehalt mit 0,13 - 0,16 Gew.-% deutlich erhöht ist.

**Tabelle: Einsatzstoffe und Reaktionsbedingungen; Stoffeigenschaften**

| **Beispiel** | | **1** | **2** | **3** | **4** | **5** | **6** | **7** | **8** | **V1** | **V2** | **V3** | **V4** |
|---|---|---|---|---|---|---|---|---|---|---|---|---|---|
| D4 | kg/h | 1,0 | 2,0 | 18 | 15 | 15 | 15 | 110 | 120 | 250* | 240* | 10 | 15 |
| Zerstäuberluftmenge | Nm³/h | 4,0 | 3,4 | 30 | 30 | 15 | 30 | 55 | 50 | 35,8 | 17,3 | 12,0 | 7,00 |
| D4/ Zerstäuberluftmenge | kg/Nm³ | 0,25 | 0,58 | 0,60 | 0,50 | 1,00 | 0,50 | 2,00 | 2,40 | 6,98 | 13,87 | 0,83 | 2,14 |
| Sprayfläche¹ | dm² | 0,88 | 0,88 | 3,44 | 3,44 | 2,68 | 3,44 | 12,2 | 12,2 | 0,41 | 0,41 | 0,18 | 0,18 |
| Sprayfläche/ Reaktorquerschnittsfläche | | 0,50 | 0,50 | 0,45 | 0,45 | 0,35 | 0,45 | 0,62 | 0,62 | 0,05 | 0,05 | 0,02 | 0,02 |
| Wasserstoff | Nm³/h | 2,0 | 4,0 | 24 | 20 | 22 | 30 | 45 | 50 | 40 | 45 | 27 | 27 |
| Primärluft | Nm³/h | 20 | 20 | 110 | 80 | 90 | 100 | 600 | 800 | 5000 | 5100 | 152 | 152 |
| Sekundärluft | Nm³/h | 5 | 25 | 40 | 45 | 60 | 50 | 400 | 250 | - | - | - | - |
| Sekundär-/Primärluft | | 0,25 | 1,25 | 0,36 | 0,56 | 0,67 | 0,50 | 0,67 | 0,31 | - | - | - | - |
| mittlere Temperatur | °C | 642 | 664 | 413 | 681 | 826 | 750 | 695 | 752 | 950 | 1030 | 869 | 974 |
| mittlere Verweilzeit | s | 1,67 | 1,02 | 1,96 | 1,78 | 1,40 | 1,45 | 0,59 | 0,52 | 0,04 | 0,04 | 1,31 | 1,11 |
| BET-Oberfläche | m²/g | 202 | 128 | 85 | 139 | 197 | 293 | 120 | 200 | 60 | 70 | 25 | 16 |
| C-Gehalt | Gew.-% | 0,04 | 0,01 | 0,02 | 0,03 | 0,04 | 0,03 | 0,02 | 0,03 | 0,14 | 0,15 | 0,13 | 0,16 |

| | | | | | | | | | | | | | |
|---|---|---|---|---|---|---|---|---|---|---|---|---|---|
| * Gehalt D4 = 75 Gew.-%, verdünnt mit Testbenzin; ¹ 30 cm unter Düse | | | | | | | | | | | | | |

## Patentansprüche

1. Verfahren zur Herstellung von Metalloxidpulvern mittels einer Flammenspraypyrolyse,
**dadurch gekennzeichnet, dass**
man ein eine Metallverbindung enthaltendes Aerosol in einem Reaktor in eine Flamme einbringt und dort zur Reaktion bringt und das erhaltene Metalloxidpulver von gasförmigen Stoffen abtrennt, wobei
a) die Flamme durch die Zündung eines Sauerstoff enthaltenden Gases (1) mit einem Brenngas gebildet wird,
b) das Aerosol durch gemeinsames Zerstäuben einer eine Metallverbindung enthaltenden Lösung und eines Zerstäubungsgases mittels einer oder mehrerer Düsen erhalten wird und
c) das Verhältnis der Sprayfläche zur Reaktorquerschnittsfläche wenigstens 0,2 ist.

2. Verfahren nach Anspruch 1, **dadurch gekennzeichnet, dass**
die Zerstäubungsform des Aerosols ein kreisförmiger Kegel mit einem Streubereich von 70-130° ist.

3. Verfahren nach den Ansprüchen 1 oder 2, **dadurch gekennzeichnet, dass** die mittlere Tropfengröße des zerstäubten Aerosoles 10 -150 µm ist.

4. Verfahren nach den Ansprüchen 1 bis 3, **dadurch gekennzeichnet, dass** dass das Aerosol erzeugt wird, indem die die Metallverbindung enthaltende Lösung und das Zerstäubungsgas in eine Mischkammer innerhalb der Düse strömen und in der Mischkammer vorgesehene Einbauten die Lösung unter Einwirkung des Zerstäubungsgases in einzelnen Tröpfchen zerteilt wird und das Aerosol aus der Mischkammer über Bohrungen in den Reaktor eingebracht wird.

5. Verfahren nach den Ansprüchen 1 bis 4, **dadurch gekennzeichnet, dass** man über eine oder mehrere Stellen an der Reaktorwandung ein die Flamme umhüllendes Sauerstoff enthaltendes Gas (2) in den Reaktor einbringt.

6. Verfahren nach den Ansprüchen 1 bis 5, **dadurch gekennzeichnet, dass** Sauerstoff enthaltendes Gas (2) / Sauerstoff enthaltendes Gas (1) = 0,1 - 2.

7. Verfahren nach den Ansprüchen 1 bis 6, **dadurch gekennzeichnet, dass** die Metallkomponente der Metallverbindung aus der Gruppe bestehend aus Al, Co, Cr, Cu, Fe, Hf, In, Li, Mn, Mo, Nb, Ni, Si, Sn, Ta, Ti, V, Y, Zn und Zr ausgewählt ist.

8. Verfahren nach den Ansprüchen 1 bis 7, **dadurch gekennzeichnet, dass** die Metallverbindung neben der Metallkomponente Kohlenstoff enthält.

9. Verfahren nach den Ansprüchen 1 bis 8, **dadurch gekennzeichnet, dass** die die Metallverbindung eine siliciumhaltige Verbindung ist, die aus der Gruppe bestehend aus Silanen, Polysiloxanen, cyclischen Polysiloxanen, Silazanen und beliebigen Mischungen hiervon ausgewählt wird.

10. Verfahren zur Herstellung eines Kieselsäurepulvers mit einer BET-Oberfläche von wenigstens 50 m²/g und einem Kohlenstoffgehalt von weniger als 0,1 Gew.-% mittels einer Flammenspraypyrolyse, bei dem man ein eine siliciumhaltige Verbindung enthaltendes Aerosol in einem Reaktor in eine Flamme einbringt und dort zur Reaktion bringt, und das erhaltene Kieselsäurepulver von gasförmigen Stoffen abtrennt,
**dadurch gekennzeichnet, dass**
a) die Flamme durch die Zündung eines Sauerstoff enthaltenden Gases mit einem Brenngas gebildet wird,
b) die siliciumhaltige Verbindung aus der Gruppe bestehend aus Silanen, Polysiloxanen, cyclischen Polysiloxanen, Silazanen und beliebigen Mischungen hiervon ausgewählt ist,
c) das Aerosol durch gemeinsames Zerstäuben einer die siliciumhaltige Verbindung enthaltenden Lösung und eines Zerstäubungsgases mittels einer oder mehrerer Düsen erhalten wird und das Verhältnis der Sprayfläche zur Reaktorquerschnittsfläche wenigstens 0,2 ist und man
d) zusätzlich ein Sauerstoff enthaltendes Gas (2) in den Reaktor einbringt, wobei das Verhältnis Sauerstoff enthaltendes Gas (2) / Sauerstoff enthaltendes Gas (1) = 0,1 - 2 ist.
